Europäisches Patentamt

European Patent Office

Office européen des brevets

(11) Veröffentlichungsnummer : **0 368 032 B1**

# (12) EUROPÄISCHE PATENTSCHRIFT

(45) Veröffentlichungstag der Patentschrift :
**13.01.93 Patentblatt 93/02**

(21) Anmeldenummer : **89119145.4**

(22) Anmeldetag : **14.10.89**

(51) Int. Cl.⁵ : **B23K 26/00,** G01B 11/12,
G01B 11/08

(54) Verfahren zur Prüfung der Toleranzen von Bohrungen.

(30) Priorität : **21.10.88 DE 3835981**

(43) Veröffentlichungstag der Anmeldung :
**16.05.90 Patentblatt 90/20**

(45) Bekanntmachung des Hinweises auf die
Patenterteilung :
**13.01.93 Patentblatt 93/02**

(84) Benannte Vertragsstaaten :
**DE FR GB IT**

(56) Entgegenhaltungen :
**WO-A-86/02301**
**GB-A- 2 115 142**
**US-A- 3 822 946**
**US-A- 4 737 613**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Reiter, Rolf, Dr.
Roseggerstrasse 9
W-8000 München 60 (DE)**
Erfinder : **Bayer, Erwin, Dr.
Blütenstrasse 10
W-8047 Karlsfeld (DE)**
Erfinder : **Steinhauser, Ludwig
Karlstrasse 11
W-801 Maisach (DE)**

## Beschreibung

Die Erfindung betrifft ein Verfahren gemäß dem Oberbegriff des Patentanspruchs 1. Ein solches verfahren ist aus der Druckschrift WO-A-86/02301 bekannt.

Das Laserimpulsbohrverfahren wird angewandt, um Bohrungen geringen Durchmessers beispielsweise an Hohlwerkstücken zu fertigen. Insbesondere Turbinenschaufeln weisen eine Vielzahl derartig feiner Kühlluftbohrungen auf, die sich mittels dieses Verfahrens automatisiert mit hoher Positioniergenauigkeit fertigen lassen.

Die Bohrungen müssen jedoch auch hinsichtlich ihres Durchmessers genaue Toleranzen einhalten, um im Betrieb den erforderlichen Kühlluftdurchsatz zu erzielen. Sind beispielsweise einzelne Durchmesser der Bohrungen zu gering, so kann dies zu einer unzulässigen Überhitzung der Turbinenschaufeln und zu deren Versagen führen. Dies wiederum kann zum Ausfall der gesamten Gasturbinenanlage führen. Es ist daher wichtig, die Maßhaltigkeit der gefertigten Bohrungen zu überprüfen.

Bisher geschieht dies dadurch, daß Meßstäbchen manuell in die einzelnen Bohrungen eingeführt werden. Dieses Verfahren bedeutet einen außerordentlich hohen Aufwand, der zudem mit hohen Kosten verbunden ist.

Mit der Laserbohranlage nach der gattungsbildenden Druckschrift ist eine Beobachtung von Bohrungen und eine Prüfung deren Toleranz möglich; es kann jedoch nur an ihrer Oberfläche oder bei äußerst geringer Bohrtiefe beobachtet und aufgezeichnet werden, was darauf zurückzuführen ist, daß die dort angebrachte Videokamera nicht im Laserstrahlengang selbst angeordnet ist sondern seitlich davon. Auf diese Weise ist die Bohrung immer nur unter einem Winkel zur Bohrachse zu betrachten, was den Nachteil hat, daß bei tieferen Bohrungen der Durchmesser nicht mehr exakt erfaßbar ist.

Hiervon ausgehend ist es Aufgabe der Erfindung, ein gattungsgemäßes Verfahren anzugeben, mit dem die Durchmesser von Bohrungen schnell und automatisiert geprüft werden können.

Aus der Druckschrift "Handbook of industrial robotic", Shimon,J. Wiley & Sons, 1985, Seiten 231, 243, 251 und 252 sind optische Aufzeichnungsverfahren bekannt, mit denen die Durchmesser von Bohrungen automatisiert überprüft werden könnten.

Erfindungsgemäß wird nun die gestellte Aufgabe dadurch gelöst, daß ein gattungsgemäßes Verfahren mit den Merkmalen a) bis e) nach dem Patentanspruch 1 ausgestaltet wird.

Beim erfindungsgemäßen Verfahren kann durch die Verwendung eines halbdurchlässigen Spiegels das Licht, das durch den schnellen Schmelzprozeß in der Bohrung entsteht, für die Auswertung herangezogen werden. Es wird durch die Fokussierlinse aufgeweitet und über den halbdurchlässigen Spiegel aus dem Strahlengang ausgekoppelt und mit einer Videokamera erfaßt. Hierbei tritt das Licht genau axial aus der Bohrung aus, so daß sich der Durchmesser der Bohrungen auch bei größeren Bohrtiefen exakt erfassen läßt. Dadurch, daß die Punkte mit niedrigem Grauwert dem Hintergrund zugeordnet sind, während die Punkte mit hohem Grauwert dem hellen Bohrungsfleck zugeordnet sind, läßt sich das Rasterbild derart binarisieren, daß der Bohrungsrand exakt festlegbar ist. Mit dem erfindungsgemäßen Verfahren kann demnach praktisch gleichzeitig mit der Fertigung einer Bohrung deren Maßhaltigkeit sehr genau überprüft werden. Somit läßt sich unmittelbar nach Fertigstellung einer Bohrung prüfen, ob die Toleranzen eingehalten worden sind. Bei zu geringen Bohrungsdurchmessern einzelner Bohrungen läßt sich sofort ein Nacharbeiten der betreffenden Bohrung durchführen ohne daß das Werkstück erneut einzuspannen und einzurichten wäre.

Eine vorteilhafte Weiterbildung der Erfindung sieht vor, daß die Trägheitsmomente zweiter Ordnung der Bohrungsquerschnittsfläche A berechnet werden, und hieraus Halbachsen einer äquivalenten Ellipsenfläche bestimmt werden. Es ist möglich, daß die Bohrungen nicht kreisrunden Querschnitt, sondern elliptische Form aufweisen. Dies hat seine Ursache darin, daß sich Verschmutzungen im Laserstrahlengang befinden können, oder die Intensitätsverteilung der Infrarotstrahlung ungleichmäßig ist. Die elliptische Form kann ferner durch die zum Laserstrahl geneigt liegende Oberfläche, oder durch den gebildeten Recastlayer (wieder erstarrte Aufschmelzungen des Materials) verursacht werden.

Eine alternative Lösung der der Erfindung zugrunde liegenden Aufgabe ist im Patentanspruch 3 angegeben.

Dieses Verfahren hat den Vorteil, daß eine weiter verbesserte Genauigkeit der Durchmesserbestimmung erzielbar ist. Der Meßfehler liegt bei diesem Verfahren bei etwa 0,4 % bei einem Solldurchmesser von 30 Bildpunkten, und fällt bei einem Durchmesser von 150 Bildpunkten auf 0,05 % ab.

Die Erfindung wird nachfolgend anhand der beigefügten Zeichnung näher erläutert.

Dabei zeigt:

Fig. 1 eine schematische Darstellung der Laserbohranordnung,

Fig. 2a ein Bild einer Bohrung,

Fig. 2b das Grauwerthistogramm des Bildes von 2a,

Fig. 2c das binarisierte Abbild der Bohrung,

Fig. 3 ein Bild einer Bohrung mit darüber gelegten Summenkurven.

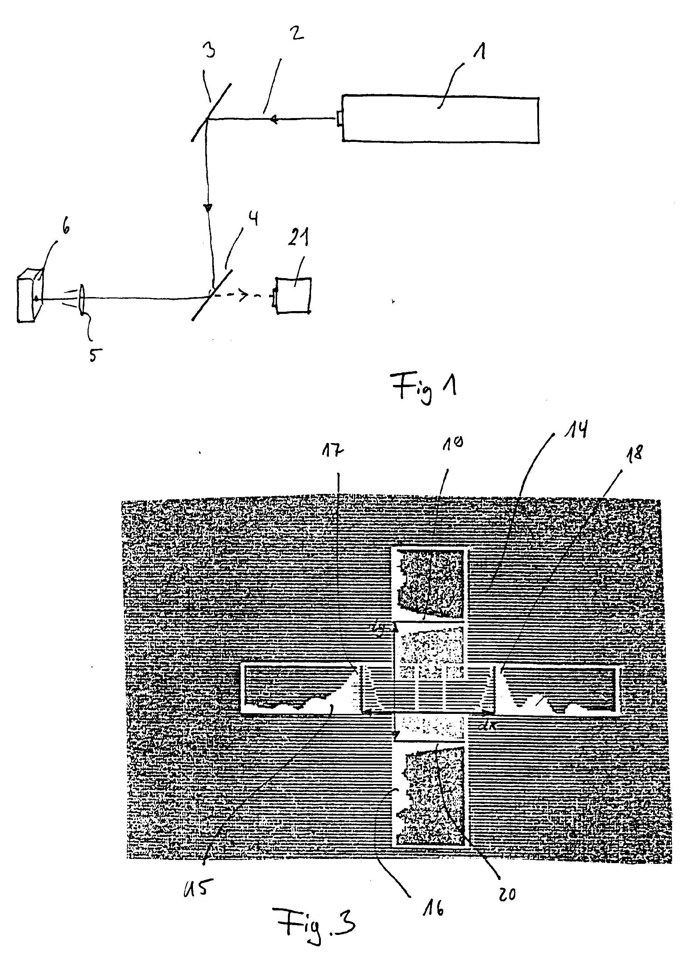

In Fig. 1 ist ein Laser 1 gezeigt, aus dem ein Laserstrahl 2 austritt und über zwei Spiegel 3 und 4 auf eine Bündellinse 5 geleitet wird. Der Laserstrahl trifft nach der Bündelung auf das Werkstück 6. Als Laser 1 ist ein Infrarotlaser geeignet, der pulsförmige Laserimpulse abgibt, wobei die Pulsfrequenz üblicherweise zwischen 2 und 10 Hz liegt. Der Spiegel 4 ist halbdurchlässig aufgebaut, so daß das vom Werkstück 6 reflektierte Licht den Spiegel 4 durchdringen kann und in das optische Aufzeichnungsgerät 21 gelangt.

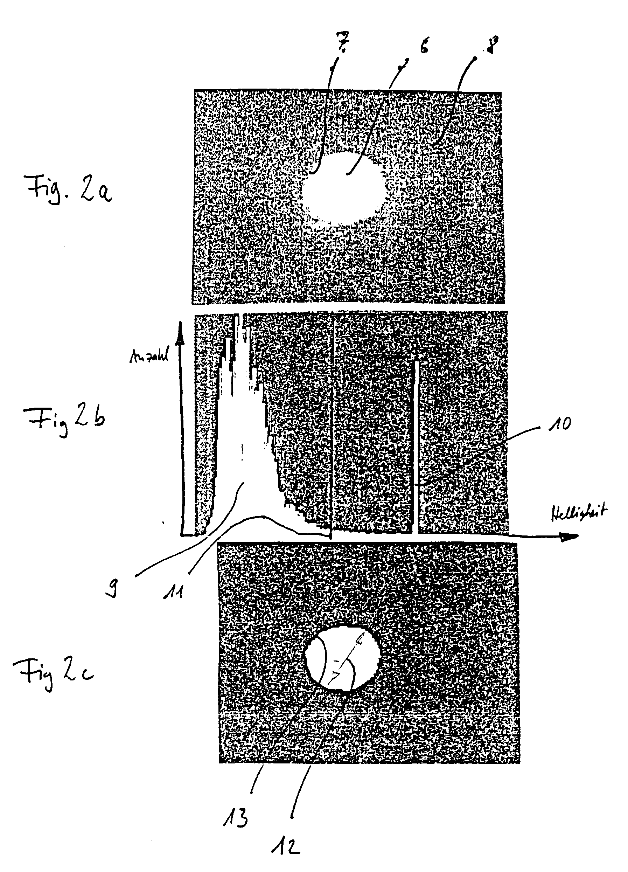

Fig. 2a zeigt ein mittels einer derartigen Anordnung angefertigtes Abbild eines Laserimpulses. Dabei ist der helle Leuchtfleck 6 zu erkennen, der ein Abbild der Bohrung darstellt. Der Bohrungsrand 7, zur umgebenden Werkstückfläche 8 ist jedoch unscharf ausgebildet.

Fig. 2b zeigt ein Grauwerthistogramm der Fläche gemäß Fig. 2a. Dabei ist auf der Abszisse die Helligkeit angetragen und auf der Ordinate die Anzahl der Bildpunkte, die eine derartige Helligkeit aufweisen. Deutlich zu erkennen ist der erste Bereich 9, der eine große Anzahl Bildpunkte mit einer relativ geringen Helligkeit kennzeichnet. Dieser Bereich 9 entspricht der Werkstoffumgebung 8 gemäß Fig. 2a. Ein schmaler Bereich 10, gebildet durch eine Anzahl Bildpunkte mit einer erheblich höheren Helligkeit entspricht dem Leuchtfleck 6 aus Fig. 2a. Die Anzahl dieser Bildpunkte entspricht ferner der Fläche des Leuchtfleckes 6. Zum Zweck der Binarisierung der Abbildung aus Fig. 2a wird ein Schwellwert 11 gewählt, der einen Helligkeitswert aufweist, der zwischen den Helligkeitswerten des Bereiches 9 und des Bereiches 10 liegt. Jeder einzelne Bildpunkt wird nun mit diesem Schwellwert 11 verglichen, wodurch das binarisierte Bild der Bohrung gemäß Fig. 2c entsteht. Dabei ist zu erkennen, daß der binarisierte Leuchtfleck 12 einen klar begrenzten Bohrungsrand 13 aufweist. Bei genügender Auflösung des Bildes wird so ein genaues Abbild der Bohrung gebildet. Die genaue Wahl des Schwellwertes 11 erfolgt dadurch, daß eine Bimodalitätsanalyse des Grauwerthistogramms für zwei ausgewählte Bildteile (1. Hintergrund, 2. Bohrung) durchgeführt wird. Die Schwelle "S" wird dabei so festgelegt, daß alle Bildpunkte, die nicht zur Bohrung zu zählen sind (das schließt auch ein evtl. hellerer Bildpunkte der Bohrung selbst ein) zum Hintergrund gezählt werden.

In Fig. 3 ist ein alternatives Verfahren zur Bestimmung des Bohrungsdurchmessers erläutert, bei dem über das Rasterbild 14 eine Spaltensummenkurve 15 und eine Zeilensummenkurve 16 gelegt sind. Die Spaltensummenkurve 15 weist zwei Maxima 17 und 18 auf, deren Abstand dem Bohrungsdurchmesser dx in dieser Richtung entspricht. Analog weist die Zeilensummenkruve zwei Maxima 19 und 20 auf, mittels der ein Durchmesser dy bestimmbar ist. Die beiden Durchmesser dx und dy können insofern voneinander abweichen, als die Bohrung elliptische Form aufweisen kann.

**Patentansprüche**

1. Verfahren zur Prüfung der Toleranz von Bohrungen, die mittels Laserimpulsen in ein Werkstück (6) eingebracht werden wobei ein Grauwert-Rasterbild der Bohrung und der Umgebung während jedes Laserimpulses mittels eines optischen Aufzeichnungsgerätes (21) in Form eines Bildpunktrasters aufgezeichnet wird, dadurch gekennzeichnet, daß

a) das optische Aufzeichnungsgerät (21) mittels eines halbdurchlässigen Spiegels (4) in den Laserstrahlengang blickt,

b) die Helligkeit jedes Bildpunktes mit einem Bezugswert verglichen wird und ein binarisiertes Rasterbild der Bohrung erzeugt wird, wobei der Bezugswert so gewählt wird, daß er zwischen einer maximalen Häufigkeit der niedrigen Grauwerte und einer maximalen Häufigkeit der hohen Grauwerte liegt,

c) die Anzahl der der Bohrung zugeordneten Bildpunkte ermittelt und hieraus die Bohrungsquerschnittfläche A bestimmt wird,

d) aus der Bohrungsquerschnittsfläche A der mittlere Bohrungsdurchmesser d mittels der Kreisgleichung $d = 2\sqrt{\frac{A}{\pi}}$ bestimmt wird und

e) der ermittelte Bohrungsdurchmesser mit Toleranzwerten zur Ausgabe eines Signals zur Anzeige der Toleranzhaltigkeit verglichen wird.

2. Verfahren nach Anspruch 1, dadurch gekennzeichnet, daß die Trägheitsmomente zweiter Ordnung der Bohrungsquerschnittsfläche A berechnet werden, und hieraus Halbachsen einer äquivalenten Ellipsenfläche bestimmt werden.

3. Verfahren zur Prüfung der Toleranz von Bohrungen, die mittels Laserimpulsen in ein Werkstück (6) eingebracht werden wobei ein Grauwert-Rasterbild der Bohrung und der Umgebung während jedes Laserimpulses mittels eines optischen Aufzeichnungsgerätes (21) in Form eines Bildpunktrasters aufgezeichnet wird, dadurch gekennzeichnet, daß

a) a) das optische Aufzeichnungsgerät (21) mittels eines halbdurchlässigen Spiegels (4) in den Laserstrahlengang blickt

b) die Grauwerte der Spalten zu Grauwert-Spaltensummen aufaddiert, und die Grauwerte der Zeilen zu Grauwert-Zeilensummen aufaddiert werden,

c) die Summenkurven differenziert werden,

d) die Maxima der differenzierten Summenkurven einer quadratischen Drei-Punkte-Interpolation unterzogen werden,

e) aus den Abständen der Maxima der horizontale Durchmesser dx und der vertikale Durchmesser dy bestimmt werden,

f) die ermittelten Bohrungsdurchmesser dx und dy mit Toleranzwerten zur Aufgabe eines Signals zur Anzeige der Toleranzhaltigkeit verglichen werden.

## Claims

1. Process for examining the tolerance of bores introduced by means of laser pulses into a workpiece (6), wherein a grey-scale scanning image of the bore and the surroundings is recorded during each laser pulse by means of an optical recording device (21) in the form of an image point scanning pattern, characterised in that

a) the optical recording device (21) looks into the laser beam path by means of a half-silvered mirror (4),

b) the clarity of each image point is compared with a reference value, and a binarised scanning image of the bore is produced, the reference value being selected so that it is between a maximum frequency of the low grey values and a maximum frequency of the high grey values,

c) the number of image points associated with the bore is ascertained and from this the bore cross-sectional area A is determined,

d) the average bore diameter d is determined from the bore cross-sectional area A by means of the circle equation $d = 2\sqrt{\dfrac{A}{\pi}}$, and

e) the bore diameter ascertained is compared with tolerance values for emitting a signal to indicate the tolerance conformity.

2. Process according to claim 1, characterised in that the moments of inertia of second order of the bore cross-sectional area A are calculated and from this semi-axes of an equivalent elliptical surface are determined.

3. Process for examining the tolerance of bores introduced by means of laser pulses into a workiece (6), wherein a grey-scale scanning image of the bore and the surroundings is recorded during each laser pulse by means of an optical recording device (21) in the form of an image point scanning pattern, characterised in that

a) the optical recording device (21) looks into the laser beam path by means of a half-silvered mirror (4),

b) the grey values of the columns are added to grey value column totals, and the grey values of the lines are added to grey value line totals,

c) the cumulative curves are differentiated,

d) the maxima of the differentiated cumulative curves are subjected to a quadratic three point interpolation,

e) the horizontal diameter dx and the vertical diameter dy are determined from the spacings of the maxima,

f) the bore diameters dx and dy ascertained are compared with tolerance values for delivering a signal to indicate the tolerance conformity.

## Revendications

1. Procédé de contrôle de la tolérance de perçages réalisés dans une pièce (6) à l'aide d'impulsions laser, procédé selon lequel on trace l'image de trame des niveaux de gris du perçage et de son environnement pendant chaque impulsion laser à l'aide d'un appareil d'enregistrement optique (21), sous la forme d'une trame de points image, procédé caractérisé en ce que :

a) l'appareil d'enregistrement optique (21) examine le chemin du faisceau laser à travers un miroir semi-transparent (4).

b) on compare la luminosité de chaque point image à une valeur de référence et on génère une image de trame numérisée du perçage, en choisissant une valeur de référence comprise entre une fréquence maximale des seuils de gris inférieurs et une fréquence maximale des seuils de gris supérieurs,

c) on détermine le nombre de points image associés au perçage et on en déduit la surface A de la section du perçage.

d) à partir de la surface de la section A du perçage, on détermine le diamètre moyen d du perçage suivant l'équation du cerce $d = 2\sqrt{\dfrac{A}{\pi}}$

e) on compare le diamètre du perçage ainsi déterminé à des tolérances pour émettre un signal indiquant le respect des tolérances.

2. Procédé selon la revendication 1, caractérisé en ce qu'on calcule le moment d'inertie du second ordre de la surface A de la section du perçage et on en déduit les demi-axes d'une surface elliptique équivalente.

3. Procédé de contrôle de tolérances de perçages réalisés dans une pièce (6) à l'aide d'impulsions laser, procédé selon lequel on enregistre une image de trame des niveaux de gris du perçage et de son environnement pendant chaque impulsion laser en utilisant un appareil d'enregistrement optique (21), l'enregistrement se faisant sous la forme d'une trame de points image, procédé caractérisé en que

a) l'appareil d'enregistrement optique (21) regarde le chemin du faisceau laser à travers un miroir semi-transparent (4).

b) on additionne les niveaux de gris des colonnes pour former une somme de niveau de gris de colonnes et on additionne les niveaux de gris de lignes pour former une somme de niveau de gris de lignes,

c) on différentie les courbes des sommes.

d) on effectue une interpolation en trois points quadratique des maxima des courbes de somme après différentiation.

e) à partir de la distance des maxima, on détermine le diamètre horizontal des $d_x$ et le diamètre vertical $d_y$.

f) on compare les diamètres de perçages $d_x$, $d_y$ ansi obtenus à des valeurs de tolérances pour former le signal affichant le respect des tolérances.

Fig 1

Fig. 3

Fig. 2a

Fig 2b

Anzahl

Helligkeit

Fig 2c